# NEUE EUROPÄISCHE PATENTSCHRIFT

(11) **EP 3 430 290 B2**
(45) Veröffentlichungstag und Bekanntmachung des Hinweises auf die Entscheidung über den Einspruch: **28.06.2023**
(45) Hinweis auf die Patenterteilung: 17.06.2020
(21) Anmeldenummer: 16801515.4
(22) Anmeldetag: 28.11.2016
(51) Int. Cl.: F16J 9/06

(54) **MEHRTEILIGER ÖLABSTREIF-KOLBENRING MIT VERRINGERTER REIBUNG**
MULTIPLE-PIECE OIL STRIPPING PISTON RING WITH REDUCED FRICTION
SEGMENT RACLEUR D'HUILE EN PLUSIEURS PARTIES POUR UN PISTON, PRÉSENTANT UN FROTTEMENT RÉDUIT

(30) Priorität: 16.03.2016 DE 102016104853
(43) Veröffentlichungstag der Anmeldung: 23.01.2019
(73) Patentinhaber: Federal-Mogul Burscheid GmbH, 51399 Burscheid (DE)
(72) Erfinder: MACHLINER, Stephan, 51379 Leverkusen (DE); RUCH, Fabian, 51375 Leverkusen (DE)
(74) Vertreter: Becker Kurig & Partner Patentanwälte mbB
(86) Internationale Anmeldenummer: PCT/EP2016/078954
(87) Internationale Veröffentlichungsnummer: WO 2017/157490

(56) Entgegenhaltungen:
- EP-A1- 3 176 474
- WO-A1-97/00393
- WO-A1-2016/017499
- DE-A1- 2 709 176
- DE-B- 1 232 419
- DE-C1- 3 318 208
- JP-A- H0 488 261
- JP-A- H08 210 503
- JP-A- 2003 049 705
- KR-A- 20010 028 338
- US-A- 2 656 230
- US-A1- 2010 171 273

## Beschreibung

Die vorliegende Erfindung betrifft einen dreiteiligen Ölabstreif-Kolbenring mit im Vergleich zu herkömmlichen Kolbenringen verringerter Reibung.

Herkömmliche Ölabstreif-Kolbenringe bzw. Ölabstreifringe bzw. Ölringe umfassen üblicherweise einen Ring der zwei Ölabstreifleisten, die überschüssiges Öl von der Zylinderinnenfläche eines Verbrennungsmotors abtragen sollen, bzw. einen definierten möglichst dünnen Ölfilm erzeugen sollen.

Es gibt verschiedene Arten von Ölabstreifringen, einfache Ölabstreifringe umfassen üblicherweise lediglich einen Ringkörper mit zwei auf der Außenfläche angeordneten Abstreifleisten. Weiter entwickelte Ausführungen betreffen Ölabstreifringe mit einer zusätzlichen Expanderfeder, die eine gleichmäßigere Abstreifwirkung entlang des gesamten Umfangs des Ölabstreifrings erreichen sollen.

In einer weiteren Ausführungsform sind sogenannte dreiteilige Ölabstreifringe bekannt, bei denen zwei dünne scheibenförmige Abstreifringe von einem gemeinsamen Träger in einer Kolbenringnut gehalten werden, wobei der Träger oft auch die Funktion einer Expanderfeder übernimmt.

Aus dem amerikanischen Patent US 2656230 von 1953 ist ein dreiteiliger Ölabstreifring bekannt.

Es ist wünschenswert, die Reibung insbesondere von Verbrennungsmotoren zu verringern. Es ist Ziel der vorliegenden Erfindung, den Reibungsverlust eines Verbrennungsmotors durch Verringern der Reibung, die von einem Ölabstreifring ausgeht, zu senken.

Die vorliegende Erfindung betrifft einen Kolbenring gemäß einem der unabhängigen Ansprüche, wobei vorteilhafte Ausführungen in den abhängigen Ansprüchen definiert sind.

Ein erster Aspekt der vorliegenden Erfindung stellt dar einen dreiteiligen Ölabstreif-Kolbenring, mit einem oberen d.h. zum Verbrennungsraum bzw. Kolbenboden weisenden scheibenförmigen Abstreifring, einen unteren d.h. zum Kurbelgehäuse bzw. Kolbenhemd bzw. Kolbenbolzen weisenden scheibenförmigen Stabilisierungsring sowie einem Expander, der beispielsweise als ein kreisförmiges, gewellten, fLaschen Metallband ausgeführt sein kann, und der an der Innenseite in Axialrichtung überstehende Vorsprünge aufweist.

Der Expander bzw. die Expanderfeder weist an einer Innenseite in Axialrichtung überstehende Vorsprünge auf und ist zwischen dem Abstreifring und dem Stabilisierungsring angeordnet. Der Expander stellt einen axialen Abstand zwischen dem Abstreifring und dem Stabilisierungsring sicher.

Die Vorsprünge des kreisförmigen Expanders, liegen zumindest an der Innenseite des Abstreifring und des Stabilisierungsring an und drücken diese nach außen. Der Abstreifring weist dabei einen größeren Außenradius und damit Außendurchmesser auf als der Stabilisierungsring.

In einer grundlegenden Ausführung übt damit der Stabilisierungsring einen geringeren Druck auf eine Zylinderinnenfläche aus, sodass dessen Reibung im Vergleich zu der Reibung des Ölabstreifrings vernachlässigt werden kann.

Bei einer weiteren Ausführungsform der vorliegenden Erfindung ist der Unterschied der Außendurchmesser / -radien des Abstreifrings und des Stabilisierungsrings so groß, dass bei eingebautem Ölabstreif-Kolbenring nur der obere Abstreifring mit einer Abstreifkante mit einer Zylinderinnenfläche in Kontakt steht, und der untere scheibenförmige Stabilisierungsring bei eingebautem Ölabstreif-Kolbenring nicht mit der Zylinderinnenfläche in Kontakt steht. Dadurch kann sichergestellt werden, dass der Anteil der Reibung, die von dem unteren Ring bzw. dem Stabilisierungsring ausgeht, vollkommen vernachlässigt werden kann.

Bei der Erfindungsgemäßen Ausführungsform des Ölabstreif-Kolbenrings weist der obere Abstreifring die gleiche Dicke in Radialrichtung auf wie der untere scheibenförmige Stabilisierungsring. Damit kann sichergestellt werden, dass sofern der Abstreifring als auch der Stabilisierungsring aus dem gleichen Material hergestellt sind und im Wesentlichen die gleichen Radialkräfte erzeugt werden. Durch gleiche Kräfte kann im Wesentlichen sichergestellt werden, dass die kreisförmige Expanderfeder sich nicht in der Kolbenringnut verkantet bzw. verkanten kann. Diese Ausführung erfordert zudem einen asymmetrisch geformten Expander, da sich sonst die unterschiedlichen Außendurchmesser / -radien des Abstreifrings und des Stabilisierungsrings nicht verwirklichen lassen.

Die Effekte der Dicke in Radialrichtung lassen sich auch auf die Axialrichtung übertragen.

Bei einer weiteren beispielhaften Ausführungsform des dreiteiligen Ölabstreif-Kolbenrings weist der obere Abstreifring und der untere scheibenförmige Stabilisierungsring eine gleiche Dicke in Axialrichtung auf. Hier kann der untere Stabiliserungsring die Kräfte durch eine größere Verformung erzeugen. Eine gleiche Dicke in Axialrichtung gestattet es zudem, einen symmetrischen Expander zu verwenden, wobei insbesondere die Vorsprünge gleich ausgeführt werden können.

Bei einer weiteren Ausführung ist der obere Abstreifring in Axialrichtung dünner als der untere Stabilisierungsring. Dadurch kann der Stabilisierungsging starrer ausgeführt werden und einen ausreichenden Druck gegenüber dem Expander aufbauen, wodurch dieser verhindern kann, dass er von dem Expander gegen die Zylinderinnenfläche gedrückt wird.

Bei einer Ausführungsform ist der Expander als kreisförmiges, gewelltes, flaches Metallband ausgeführt, das in Axialrichtung gewellt ist. In dieser Ausführung erstreckt sich die Amplitude der Wellung in einem eingebauten Zustand zwischen den beiden Ringnutflanken in der Breitenabmessung der Ringnut. Dadurch kann eine einfache Ausführung des Expanders als ein umlaufender wellenförmiger Expander ausgeführt werden. Diese Ausführung kann so ausgeführt werden, dass die Höhe des Expanders und damit des Kolbenrings größer wird, wenn der Kolbenring in Radialrichtung zusammengedrückt wird.

Bei einer anderen beispielhaften Ausfuhrungsform des dreiteiligen Ölabstreif-Kolbenrings, ist der Expander als kreisförmiges, gewelltes, flaches Metallband, ausgeführt, das in Radialrichtung gewellt ist. In dieser Ausführung erstreckt sich die Amplitude der Wellung in einem eingebauten Zustand zwischen dem Ringnutgrund und der Zylinderinnenfläche. Diese Ausführung hat den Vorteil, dass sich die Höhe des Kolbenrings unabhängig vom aktuellen Durchmesser / Radius des Kolbenrings nicht ändert

Bei einer weiteren beispielhaften Ausführung des dreiteiligen Ölabstreif-Kolbenrings ist die Expanderfeder als geschlitzte Biegefeder ausgeführt. Die geschlitzte Biegefeder kann als Metallband mit einem U-förmigen Querschnitt ausgeführt sein, in das abwechselnd Schlitze eingebracht sind. Das U-Profil mit dem U-förmigen Querschnitt weist jeweils Schlitze auf, die sich von einem Schenkel des U-förmigen Profils bis zu dem andern Schenkel erstrecken. Insgesamt ergibt sich eine Zickzackfeder, deren Zickzackform in der Ebene einer Blechlage verläuft, und wobei die Blechlage zu einer U-Form gebogen ist. Die Schlitze erstrecken sich dabei so, dass sie sich überschneiden, sodass die sich ergebende Form wie eine Zickzackfeder wirken kann. im Querschnitt können die Enden der Schenkel der U-Form nach außen gewinkelt sein, um die Vorsprünge bzw. Laschen zu bilden, welche den Abstreif- und den Stabilisierungsring nach außen drücken.

Bei einer weiteren Ausführung ist die Expanderfeder zusätzlich mit einem Stabilisierungsdraht versehen, der durch Öffnungen in Wellenflanken des gewellten Metallbandes (hindurch) verläuft. Diese Ausführung ist vor allem für die in Radialrichtung und die in Axialrichtung gewellten Expanderfedern vorgesehen. Der Stabilisierungsdraht kann dabei verhindern, dass sich die Expanderfeder nach innen einbeult und an der Kolbenringnut anliegt. Der Stabilisierungsdraht kann ebenfalls sicherstellen, dass die Enden der Expanderfeder aufeinander liegen bleiben.

In einer anderen beispielhaften Ausführungsform sind die Vorsprünge durch Laschen an der Expanderfeder bzw. dem Metallband gebildet. Solche Laschen können aus dem Material herausgedrückt sein, oder an einer Kante des Materials der Expanderfeder anliegen. Die Vorsprünge sollen jeweils an den Innenrändern des Abstreifrings und des Stabilisierungsring anliegen und diese nach außen in Richtung Zylinderinnenwand drücken.

In einer weiteren Ausführungsform des dreiteiligen Ölabstreif-Kolbenrings sind Vorsprünge vorgesehen, durch die die Expanderfeder bzw. das kreisförmige, gewellte, flache Metallband, und/oder der Stabilisierungsring in der Kolbenringnut bezüglich des Nutgrundes zentriert werden. Da der Stabilisierungsring nicht gegenüber der Zylinderinnenwand abgestützt wird, ist seine Lage in der Kolbenringnut nicht weiter definiert. Um den Stabilisierungsring in der Kolbenringnut zentrisch auszurichten, können daher Innenvorsprünge an dem Stabilisierungsring und/oder der Expanderfeder angeordnet werden, um eine definierte Position des Stabilisierungsring in der Kolbenringnut zu erreichen. Dies kann durch Laschen oder Innenvorsprünge verwirklicht werden, die den Stabilisierungsring und/oder die Expanderfeder gegenüber dem Nutrund abstützen,

Eine weitere Ausführung des Ölabstreif-Kolbenrings weist einen Stabilisierungsring auf, der einen Stoßbereich aufweist, der mit Verbindungselementen versehen ist, die es gestatten den Stoß des Stabilisierungsring zu schließen, in dem die Stoßenden miteinander verbunden werden. Der Stabilisierungsring soll nicht mit der Zylinderinnenwand in Kontakt treten, um Reibung zu vermeiden; dies kann am einfachsten dadurch sichergestellt werden, dass die Stoßenden z. B. mit Schwalbenschwanz-Strukturen versehen werden, die es ermöglichen dass sich die Stoßenden ineinander verhaken. So kann sichergestellt werden, dass der Stabilisierungsring nicht mit der Zylinderinnenwand in Kontakt treten kann. Es ist möglich zuerst den Stabilisierungsring zu montieren, dessen Stoßenden zu verbinden, dann den Expander einzusetzen, und schließlich den Abstreifring in die Kolbenringnut einzulegen.

Gemäß einer weiteren Ausführungsform der vorliegenden Erfindung ist bei dem dreiteiligen Ölabstreif-Kolbenring der Stabilisierungsring nach innen vorgespannt, sodass dieser die Neigung hat, die Stoßenden in Kontakt zu bringen. Der Stabilisierungsring ist im Gegensatz zu dem in Radialrichtung nach außen vorgespannten Abstreifring, in Radialrichtung nach innen vorgespannt, um die in Radialrichtung nach außen wirkenden Kräfte des Expanders bzw. der Expanderfeder aufnehmen zu können.

Weitere Merkmale und Vorteile der vorliegenden Erfindung ergeben sich aus der nachstehenden Beschreibung in Verbindung mit den Zeichnungen, in denen gleiche Bezugszeichen dieselben oder ähnliche Teile bezeichnen. In den Zeichnungen sind mehrere Ausführungsbeispiele der Erfindung gezeigt. In den Figuren wird die vorliegende Erfindung anhand von nicht maßstabsgerechten, schematischen Darstellung veranschaulicht, die vor allem den Unterschied zu herkömmlichen Ölabstreifringen verdeutlichen sollen.
Figur 1 zeigt einen herkömmlichen dreiteiligen Ölabstreifring mit einer in Axialrichtung gewellten Expanderfeder in einer perspektivischen Teilansicht.
Figur 2A zeigt einen dreiteiligen Ölabstreifring mit einer in Axialrichtung gewellten Expanderfeder in einer perspektivischen Teilansicht, der nicht zur Erfindung gehört.
Figur 2B zeigt den dreiteiligen Ölabstreifring von Figur 2A in einer Schnittansicht.
Figur 2C zeigt eine erfindungsgemäße Variante des dreiteiligen Ölabstreifring von Figur 2A in einer Schnittansicht.
Figur 2D zeigt eine weitere erfindungsgemäße Variante des dreiteiligen Ölabstreifring von Figur 2A in einer Schnittansicht.
Figur 3A zeigt einen dreiteiligen Ölabstreifring mit einer in Radialrichtung gewellten Expanderfeder in einer Schnittansicht.
Figur 3B zeigt eine Variante des dreiteiligen Ölabstreifring von Figur 3A in einer Schnittansicht, die für das Verständnis der Erfindung hilfreich ist.
Figur 4 zeigt einen erfindungsgemäßen dreiteiligen Ölabstreifring mit einer Expanderfeder, die als geschlitzte Biegefeder ausgeführt ist.

Im Folgenden werden sowohl in den Figuren als auch in der Beschreibung gleiche oder ähnliche Bezugszeichen verwendet, um auf gleiche oder ähnliche Elemente oder Komponenten Bezug zu nehmen.

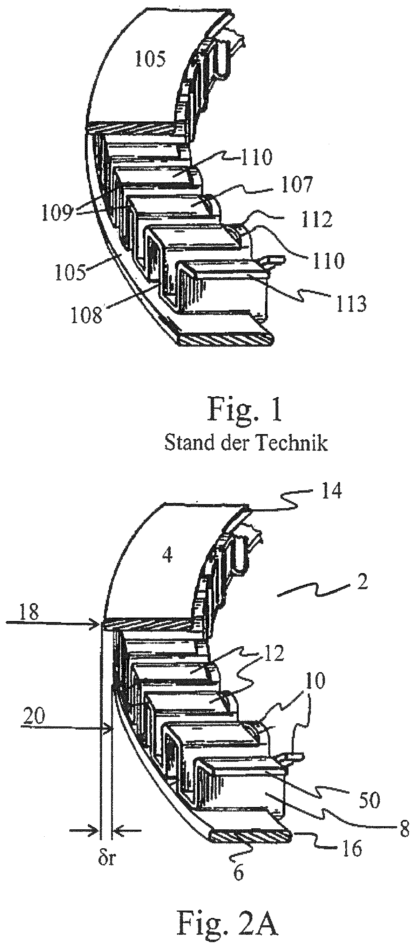

Figur 1 zeigt einen herkömmlichen dreiteiligen Ölabstreifring mit einer in Axialrichtung gewellten Expanderfeder in einer perspektivischen Teilansicht. Der herkömmliche dreiteilige Ölabstreifring umfasst zwei Abstreifelemente 105 und einen Expander/Abstandshalter 109, der aus einem elastischen duktilen Metallband bevorzugt einem Stahlband 113 hergestellt ist. Der Expander/Abstandshalter stellt einen axialen Abstand zwischen den beiden Abstreifelementen 105 sicher und drückt diese in gleichem Maße nach außen gegen eine Zylinderinnenwand. Das Stahlband 109 ist gewellt und umfasst mehrere gleichmäßig beabstandete Wellen 108 in Axialrichtung. Die gebogenen Stellen 109 der Wellen sind mit Schlitzen 112 versehen, wobei die Abschnitte 111 der Wellen abgeplattet sind, um eine Abstützung der Abstreifringe 105 in Axialrichtung zu erreichen. Die Abschnitte 101 der Bögen, die über die abgeflachten Wellenberge überstehen, bilden Vorsprünge 101 die gegen Innenseiten der Abstreifelemente 105 anliegen und diese in Richtung der Zylinderinnenwand nach außen drücken. Die Vorsprünge 101 stellen zudem sicher, dass der Expander /Abstandshalter 107 nicht mit der Zylinderwand in Kontakt kommt.

Die Wellenformen bzw. geraden Abschnitte 108 des Stahlbandes 113 bilden eine umlaufende Reihe von Federelementen, die unter einer Druckbelastung stehen, wenn der dreiteilige Ölabstreifring in die Kolbenringnut eingesetzt ist. Die Enden bzw. Vorsprünge 113 des Expander/Abstandshalter 107 liegen wie dargestellt an der Unterseite der Abstreifelemente 107 an und drücken sie jeweils gegen die Kolbenringflanke. Die Abflachungen 107 können sehr gleichmäßig geformt werden, und die Größe der durch den Expander 109 bereitgestellten Radialkraft kann in dieser Bauform sehr genau eingestellt werden.

Figur 2A zeigt einen dreiteiligen Ölabstreifring 2 mit einer in Axialrichtung gewellten Expanderfeder 8 in einer perspektivischen Teilansicht. Die Darstellung entspricht im Wesentlichen der Figur 1, wobei anstelle des unteren Abstreifelements ein Stabilisierungsring 6 vorgesehen ist dessen Außendurchmesser/-radius kleiner ist als der des oberen scheibenförmigen Abstreifrings 4. Der Expander/Abstandshalter 8 ist als in Axialrichtung gewelltes Metallband ausgeführt das Anlageflächen 12 für den Abstreifring 4 und für den Stabilisierungsring 6 umfasst. An dem in Axialrichtung gewellten fLaschen Metallband sind Vorsprünge 10 vorgesehen die in Axialrichtung vorstehen und jeweils innen an sowohl den Abstreifring 4 als auch den Stabilisierungsring 6 anliegen und diese nach außen drücken. Durch unterschiedliche Außendurchmesser / -radien des Abstreifrings 4 und des Stabilisierungsrings 6 steht der Abstreifring 4 um den als auch den Durchmesser- / Radienunterschied zwischen Stabilisierungsring und Abstreifring weiter nach außen vor als der Stabilisierungsring 6. Damit tritt nur der Abstreifring 4 mit einer Zylinderinnenwand in Kontakt oder zumindest wird lediglich der Abstreifring mit einer beträchtlichen Kraft gegen die Zylinderinnenwand gedrückt. In dieser Ausführung streift nur der Abstreifring Öl von einer Zylinderinnenwand ab, während der Stabilisierungsring entweder überhaupt keinen Kontakt mit der Zylinderinnenfläche hat oder nur so leicht von dem Expander gegen die Zylinderinnenfläche gedrückt wird, so dass dieser keinen wesentlichen Beitrag zum Abstreifen des Öl leisten kann.

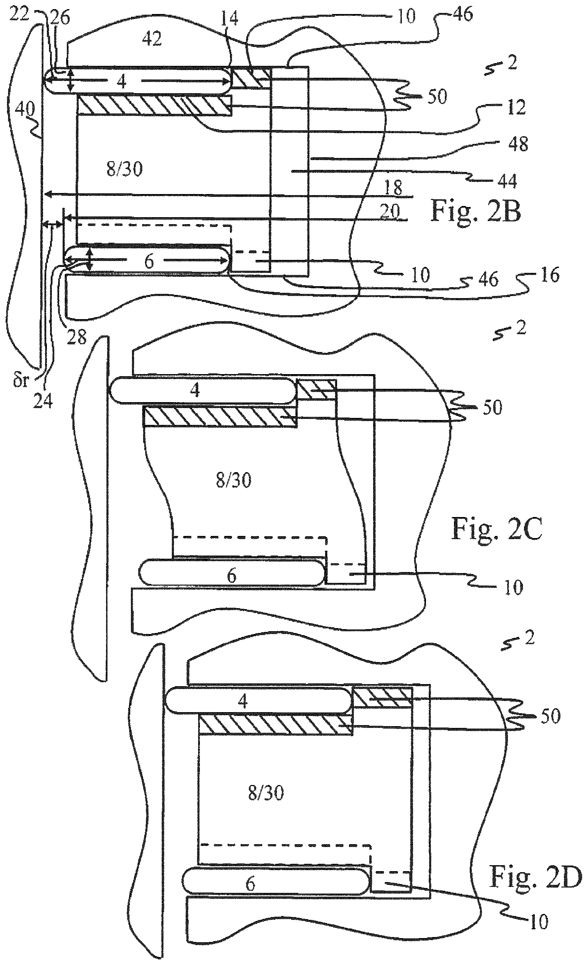

Figur 2B zeigt den dreiteiligen Ölabstreifring 2 von Figur 2A in einer Schnittansicht. in der Figur 2B sind nahezu alle Bezugszeichen dargestellt. Die Bezugszeichen wurden in den folgenden Figuren nicht eingetragen, um die Übersichtlichkeit der Figuren und die Kürze und Prägnanz der Beschreibung nicht durch unnötige redundante mehrmalige Wiederholungen gleicher Bezugszeichen unnötig zu vermindern.

Die Ausführung des dreiteiligen Ölabstreif-Kolbenring 2 umfasst einen oberen scheibenförmigen Abstreifring 4, einen unteren scheibenförmigen Stabilisierungsring 6, sowie einen kreisförmigen, Expander/Abstandshalter 8, der zwischen dem Abstreifring 4 und dem Stabilisierungsring 6 angeordnet ist. Der Expander 8 ist als in Axialrichtung gewelltes, flaches Metallband 30 ausgeführt.

Der Expander weist Vorsprünge 10 auf, die sich in Axialrichtung über Anlageflächen 12 des Expanders erstrecken und die jeweils an der Innenseite 14 des Abstreifrings bzw. der Innenseite 16 des Stabilisierungsrings 6 anliegen und diese in Radialrichtung nach außen drücken.

Der Abstreifring 4 ist nach außen vorgespannt und wird zusätzlich durch den Expander nach außen gegen die Zylinderinnenwand 40 gedrückt. Der Stabilisierungsring 6 ist nach innen vorgespannt und stabilisiert Expander 8 und verhindert, dass dieser sich in der Kolbenringnut 44 verkanten und verklemmen kann.

Der dreiteilige Ölabstreif-Kolbenring 2 ist in eine Kolbenringnut 44 eines Kolbens 42 eingesetzt und liegt an der oberen und unteren Kolbenringnutflanke 46 an. Der dreiteilige Ölabstreif-Kolbenring 2 steht nicht mit dem Kolbenringnutgrund 48 in Kontakt. Der dreiteilige Ölabstreif-Kolbenring 2 steht nur mit einer Außenkante des oberen Abstreifrings 4 mit einer Zylinderinnenfläche 40 in Kontakt.

Der Expander 8 ist als in Axialrichtung gewelltes, flaches Metallband 30 ausgeführt, und die Bereiche 50 stellen jeweils die Querschnittsflächen des Metallbandes 30 bzw. des Expanders dar, während die andere Ansicht eine Aufsicht auf eine Flanke einer Welle des gewellten Metallbandes darstellt.

Der Abstreifring 4 weist eine axiale Dicke 26 auf, die genauso groß ist wie eine axiale Dicke 26 des Stabilisierungsrings 6. Der Abstreifring 4 weist eine radiale Dicke 22 auf, die größer ist als eine radiale Dicke 24 des Stabilisierungsrings 6. Dieser Aufbau gestattet es einen im Wesentlichen symmetrischen Expander 8 zu verwenden, dessen Auflageflächen für den Abstreifring 4 und den Stabilisierungsring 6 jeweils gleich groß sind.

Die Pfeile 18 und 20 stellen jeweils den Außenradius bzw. Außendurchmesser des Abstreifrings 4 bzw. des Stabilisierungsrings 6 dar. Der Abstreifring 4 weist einen um δr größeren Radius auf als der Stabilisierungsring 6. Durch den Radiusunterschied δr zwischen Stabilisierungsring und Abstreifring kann sichergestellt werden, dass lediglich der Abstreifring 4 Öl von der Zylinderinnenwand 40 abschabt, und auch nur der Abstreifring 4 zur Reibung des dreiteiligen Ölabstreif-Kolbenring 2 beiträgt. Somit sollte sich der Reibungswiderstand des erfindungsgemäßen dreiteiligen Ölabstreif-Kolbenring 2 gegenüber einem herkömmlichen dreiteiligen Ölabstreif-Kolbenring wie er beispielswiese in Figur 1 gezeigt ist verringern lassen. Die Verringerung des Reibungswiderstandes wird dadurch erreicht, dass erfindungsgemäß nur eine Abstreifkante Öl abstreift und nur eine Abstreifkante eine Reibung mit der Zylinderinnenfläche erzeugt.

Figur 2C zeigt eine Variante des dreiteiligen Ölabstreifring von Figur 2A in einer Schnittansicht. Im Gegensatz zu der Ausführung von Figur 2A weisen der Abstreifring 4 und der Stabilisierungsring eine gleiche radiale Dicke 22 auf. Durch diese Konstruktion kann beigebogenen Abstreif- bzw. Stabilisierungsringen 4, 6 jeweils von dem gleichen Material ausgegangen werden. Der Expander 8 ist als Metallband 30 ausgeführt, das in Axialrichtung gewellt ist. Das Metallband ist ebenfalls in Radialrichtung gewellt, um den Abstreif- bzw. Stabilisierungsringen 4, 6 jeweils einen anderen Durchmesser bereitzustellen, an dem die Vorsprünge 10 die Ringe 4, 6 jeweils nach innen abstützen. Auch in Figur 2C ist der Querschnitt des Metallstreifens 30 des Expanders 8 durch da Bezugszeichen 50 gekennzeichnet.

Figur 2C zeigt eine weitere Variante des dreiteiligen Ölabstreifring von Figur 2A in einer Schnittansicht. Im Gegensatz zu der Ausführung von Figur 2A weisen der Abstreifring 4 und der Stabilisierungsring eine gleiche radiale Dicke 22 auf. Durch diese Konstruktion kann bei gebogenen Abstreif- bzw. Stabilisierungsringen 4, 6 jeweils von dem gleichen Material ausgegangen werden. Der Expander 8 ist als Metallband 30 ausgeführt, so dass die Vorspünge 10 jeweils in Radialrichtung eine andere Entfernung zu einer Mittelachse des Zylinders aufweisen. Das Metallband kann hier einfacher hergestellt werden. In Figur 2D ist der Querschnitt des Metallstreifens 30 des Expanders 8 durch da Bezugszeichen 50 gekennzeichnet.

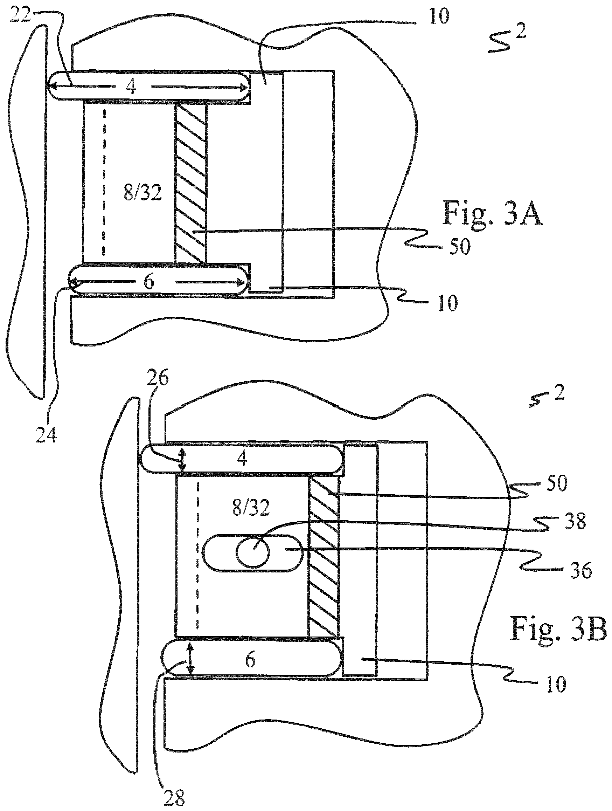

Figur 3A zeigt eine Querschnittsansicht einer anderen Variante eines dreiteiligen Ölabstreifrings 2. Der Abstreifring 4 und der Stabilisierungsring 6 weisen wie in Figur 2B jeweils eine unterschiedliche Breite in Radialrichtung auf. Die radiale Breite 22 des Abstreifrings 4 ist größer als die radiale Breite 24 des Stabilisierungsrings 6. Der Abstreifring 4 und der Stabilisierungsring 6 weisen in Figur 3A jeweils eine gleiche Breite in Axialrichtung auf. Auch in Figur 3A wird eine Expander 8 verwendet, der als ein gewelltes Metallband 32 ausgeführt ist. Im Gegensatz zu dem Expander 8 der Figuren 2A bis 2D ist der Expander 8 der Figuren 3A und 3B als in Radialrichtung gewellter Metallband 32 ausgeführt. Die Vorsprünge 10 können hier einfach als Laschen ausgeführt werden, die seitlich (bzw. nach unten und oben) über die Anlageflächen des Expanders 8 herausragen.

Figur 3B zeigt eine Querschnittsansicht einer zusätzlichen Variante eines dreiteiligen Ölabstreifrings 2. Der Abstreifring 4 und der Stabilisierungsring 6 weisen wie in Figur 3A jeweils eine unterschiedliche Breite in Radialrichtung auf. Die radiale Breite 22 des Abstreifrings 4 ist größer als die radiale Breite 24 des Stabilisierungsrings 6.

Der Abstreifring 4 und der Stabilisierungsring 6 weisen im Gegensatz zu Figur 3A jeweils eine unterschiedliche Breite in Axialrichtung auf. Die axiale Breite 26 des Abstreifrings 4 ist kleiner als die axiale Breite 28 des Stabilisierungsrings 6. In dieser Bauform kann der Stabilisierungsring 6 stabiler ausgeführt werden als der Abstreifring 4. Ein Ziel der Erfindung besteht darin zu verhindern, dass der Expander 8 in der Kolbenringnut vertwisten und sich so verklemmen kann. Um dies zu erreichen sollten die Kräfte die jeweils auf die axialen Vorsprünge des Expanders ausgeübt werden, möglichst gleich sein. da der Stabilisierungsring eine kleinere radiale Abmessung aufweisen wird als der Abstreifring und der Abstreifring zusätzlich durch die Zylinderinnenwand abgestützt wird, an der er anliegt. Daher muss der Stabilisierungsring eine größere Kraft erzeugen können als der Abstreifring 4. Der Stabilisierungsring 6 kann dies erreichen, in dem er nach innen vorgespannt wird und in dem er steifer ausgeführt wird als der Abstreifring.

In der Figur 3B ist der Expander 8 bzw. das in Radialrichtung gewellte Metallband mit Öffnung 36 in Umfangsrichtung versehen, in denen ein umlaufender Stabilisierungsdraht 38 angeordnet ist. Der Stabilisierungsdraht soll verhindern, dass sich der Expander wellt und sich gegen den Nutgrund abstützt.

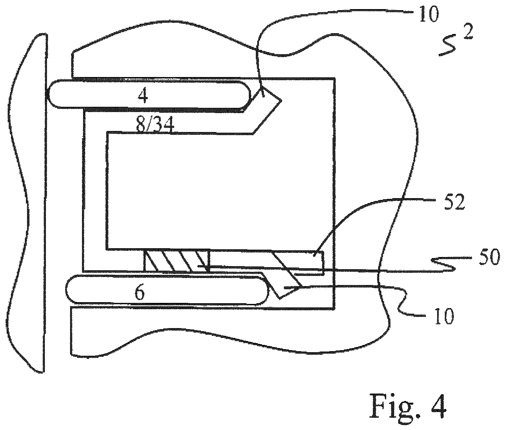

In der Figur 4 ist der Expander 8 als geschlitzte Biegefeder 34 ausgeführt. Die geschlitzte Biegefeder 34 weist einen U-Förmigen Querschnitt auf. Die Enden der Schenkel des U-förmigen Querschnitts sind nach außen gebogen um jeweils an den Innenkanten des Abstreifrings 4 und des Stabilisierungsrings anzuliegen. In Figur 4 ist der Querschnitt der geschlitzte Biegefeder 34 / des Expanders 8 durch da Bezugszeichen 50 gekennzeichnet.

Innen am unteren Rand des Expanders sind Zentrierungsvorsprünge 52 an dem Expander 8 vorgesehen. Weder der Expander 8 noch der Stabilisierungsring 8 wird durch einen Kontakt mit einer Zylinderinnenfläche stabilisiert, da ein derartiger Kontakt wiederum eine erhöhng der Reibung bedeuten würde. Die Zentrierungsvorsprünge 52 an dem Expander 8 können durch einen Kontakt mit dem Nutgrund verhindern, dass der Stabilisierungsring oder der Expander mit der Zylinderinnenfläche in Kontakt tritt und so Reibung erzeugt. Es ist ebenfals möglich die Zentrierungsvorsprünge 52 an dem Stabilisierungsring 6 anzubringen.

Es sollen auch weitere Kombinationen einzelner Merkmale der ausgeführten beispielhaften Ausführungsformen als offenbart angesehen werden. Insbesondere könne alle Ausführungen mit den Zentrierungsvorsprüngen versehen werden, die Ringe können verschiedene Dicken in Radial- und Axialrichtung aufweisen und die Vorsprünge in Axialrichtung können ebenfalls unterschiedlich ausgeführt werden (in dichter und radialer Position des Expanders).

In einer weiteren Ausführung ist vorgesehen ein dreiteiliger Ölabstreif-Kolbenring 2, umfassend einen unteren scheibenförmigen Abstreifring 4, einen oberen scheibenförmigen Stabilisierungsring 6 (zum Brennraum bin) sowie einen kreisförmigen Expander 8, der an einer Innenseite in Axialrichtung überstehende Vorsprünge 10 aufweist, und wobei der kreisförmige Expander 8 zwischen dem unteren Abstreifring 4 und dem oberen Stabilisierungsring 6 angeordnet ist, wobei die Vorsprünge 10 jeweils innen gegen eine Innenseite 14 des Abstreifrings 4 bzw. eine Innenseite 16 des Stabilisierungsrings 6 anliegen, wobei ein Außenradius des unteren Abstreifrings 4 größer ist als ein Außenradius des oberen Stabilisierungsring 6.

### Bezugszeichenliste

- 2: dreiteiliger Ölabstreif-Kolbenring
- 4: oberer scheibenförmiger Abstreifring,
- 6: unteren scheibenförmiger Stabilisierungsring
- 8: kreisförmige, Expander/Abstandshalter
- 10: in Axialrichtung überstehende Vorsprünge
- 12: Anlageflächen des Expanders/Abstandshalters
- 14: Innenseite des Abstreifrings
- 16: Innenseite des Stabilisierungsrings
- 18: Außenradius des Abstreifrings
- 20: Außenradius des Stabilisierungsrings
- 22: Dicke des Abstreifrings in Radialrichtung
- 24: Dicke des Stabilisierungsrings in Radialrichtung
- 26: Dicke des Abstreifrings in Axialrichtung
- 28: Dicke des Stabilisierungsrings in Axialrichtung
- 30: in Axialrichtung gewelltes, flaches Metallband
- 32: in Radialrichtung gewelltes, flaches Metallband
- 34: Geschlitzte Biegefeder
- 36: Öffnung in Umfangsrichtung
- 38: Stabilisierungsdraht
- 40: Zylinderinnenwand / Zylinderinnenfläche
- 42: Kolben
- 44: Kolbenringnut
- 46: Kolbenringnutflanke
- 48: Kolbenringnutgrund
- 50: Querschnitt des Expanders/Abstandshalters
- 52: Zentrierungsvorsprünge

- δr: Radiusunterschied zwischen Stabilisierungsring und Abstreifring

## Patentansprüche

1. Dreiteiliger Ölabstreif-Kolbenring (2), umfassend einen
oberen scheibenförmigen Abstreifring (4), einen unteren scheibenförmigen Stabilisierungsring (6) sowie einen kreisförmigen Expander (8), der an einer Innenseite in Axialrichtung überstehende Vorsprünge (10) aufweist, und wobei der kreisförmige Expander (8) zwischen dem oberen Abstreifring (4) und dem unteren Stabilisierungsring (6) angeordnet ist, wobei die Vorsprünge (10) jeweils innen gegen eine Innenseite (14) des Abstreifrings (4) bzw. eine Innenseite (16) des Stabilisierungsrings (6) anliegen, **dadurch gekennzeichnet, dass** ein Außenradius (18) des Abstreifrings (4) größer ist als ein Außenradius (20) des unteren Stabilisierungsring (6), **dadurch gekennzeichnet, dass** der obere Abstreifring (4) und der untere scheibenförmige Stabilisierungsring (6) eine gleiche Dicke in Radialrichtung (22, 24) aufweisen.

2. Dreiteiliger Ölabstreif-Kolbenring (2), gemäß Anspruch 1, **dadurch gekennzeichnet, dass** bei eingebautem Ölabstreif-Kolbenring (2) nur der obere Abstreifring (4) mit einer Abstreifkante mit einer Zylinderinnenfläche (40) in Kontakt steht, und der untere scheibenförmige Stabilisierungsring (6) bei eingebautem Ölabstreif-Kolbenring (2) nicht mit der Zylinderinnenfläche (40) in Kontakt steht.

3. Dreiteiliger Ölabstreif-Kolbenring (2), gemäß einem der Ansprüche 1 bis 2, **dadurch gekennzeichnet, dass** eine axiale Dicke (26) des oberen Abstreifrings (4) genau so groß ist wie eine axiale Dicke (28) des unteren scheibenförmigen Stabilisierungsrings.

4. Dreiteiliger Ölabstreif-Kolbenring (2), gemäß einem der Ansprüche 1 bis 2, **dadurch gekennzeichnet, dass** eine axiale Dicke (26) des oberen Abstreifrings (4) kleiner ist als eine axiale Dicke (28) des unteren Stabilisierungsrings (6).

5. Dreiteiliger Ölabstreif-Kolbenring (2), gemäß einem der Ansprüche 1 bis 4, **dadurch gekennzeichnet, dass** der kreisförmige Expander (8) als gewelltes, flaches in Axialrichtung gewelltes Metallband (30) ausgeführt ist.

6. Dreiteiliger Ölabstreif-Kolbenring (2), gemäß einem der Ansprüche 1 bis 4, **dadurch gekennzeichnet, dass** der kreisförmige Expander (8) als in Radialrichtung gewelltes, flaches Metallband (32) ausgeführt ist.

7. Dreiteiliger Ölabstreif-Kolbenring (2), gemäß einem der Ansprüche 1 bis 4, **dadurch gekennzeichnet, dass** der Expander (8) als geschlitzte Biegefeder (34) ausgeführt ist.

8. Dreiteiliger Ölabstreif-Kolbenring (2), gemäß einem der Ansprüche 1 bis 7, **dadurch gekennzeichnet, dass** der Expander (8) zusätzlich mit einem Stabilisierungsdraht (38) versehen ist, der durch Öffnungen (36) in Wellenflanken des gewellten Metallbandes verläuft.

9. Dreiteiliger Ölabstreif-Kolbenring (2), gemäß einem der Ansprüche 1 bis 8, **dadurch gekennzeichnet, dass** die Vorsprünge (10) durch Laschen an dem Expander (8) oder dem Metallband, gebildet sind.

10. Dreiteiliger Ölabstreif-Kolbenring (2), gemäß einem der Ansprüche 1 bis 9, **dadurch gekennzeichnet, dass** Zentrierungsvorsprünge (52) vorgesehen sind, durch die der Expander (8), das kreisförmige, gewellte, flache Metallband, und/oder der Stabilisierungsring (6) in einer Kolbenringnut (44) bezüglich eines Nutgrundes (48) zentriert werden.

11. Dreiteiliger Ölabstreif-Kolbenring (2), gemäß einem der vorstehenden Ansprüche, **dadurch gekennzeichnet, dass** ein Stoßbereich des Stabilisierungsrings (6) mit Verbindungselementen versehen ist, die es gestatten, den Stoß des Stabilisierungsrings (6) zu schließen.

12. Dreiteiliger Ölabstreif-Kolbenring (2), gemäß einem der vorstehenden Ansprüche, **dadurch gekennzeichnet, dass** der Stabilisierungsring (6) nach innen vorgespannt ist.

## Claims

1. A three-piece oil scraper piston ring (2), comprising an upper, disc-shaped scraping ring (4), a lower, disc-shaped stabilizing ring (6), and a circular expander (8) which has projections (10) protruding in the axial direction on an inner face, and wherein the circular expander (8) being arranged between the upper scraping ring (4) and the lower stabilizing ring (6), wherein the projections (10) each bearing inwardly against an inner face (14) of the scraping ring (4) and against an inner face (16) of the stabilizing ring (6), respectively, **characterized in that** an outer radius (18) of the scraping ring (4) is greater than an outer radius (20) of the lower stabilizing ring (6), **characterized in that** the upper scraping ring (4) and the lower, disc-shaped stabilizing ring (6) have an identical thickness in the radial direction (22, 24).

2. The three-piece oil scraper piston ring (2) according to claim 1, **characterized in that** only a scraping edge of the upper scraping ring (4) is in contact with a cylinder inner surface (40) when the oil scraper piston ring (2) is installed, and the lower, disc-shaped stabilizing ring (6) is not in contact with the cylinder inner surface (40) when the oil scraper piston ring (2) is installed.

3. The three-piece oil scraper piston ring (2) according to any one of claims 1 to 2, **characterized in that** an axial thickness (26) of the upper scraping ring (4) is exactly equal to an axial thickness (28) of the lower, disc-shaped stabilizing ring.

4. The three-piece oil scraper piston ring (2) according to any one of claims 1 to 2, **characterized in that** an axial thickness (26) of the upper scraping ring (4) is smaller than an axial thickness (28) of the lower stabilizing ring (6).

5. The three-piece oil scraper piston ring (2) according to any one of claims 1 to 4, **characterized in that** the circular expander (8) is in the form of a corrugated, flat metal strip (30) which is corrugated in the axial direction.

6. The three-piece oil scraper piston ring (2) according to any one of claims 1 to 4, **characterized in that** the circular expander (8) is in the form of a flat metal strip (32) which is corrugated in the radial direction.

7. The three-piece oil scraper piston ring (2) according to any one of claims 1 to 4, **characterized in that** the expander (8) is in the form of a slotted spiral spring (34).

8. The three-piece oil scraper piston ring (2) according to any one of claims 1 to 7, **characterized in that** the expander (8) is additionally provided with a stabilizing wire (38) which runs through openings (36) in wave flanks of the corrugated metal strip.

9. The three-piece oil scraper piston ring (2) according to any one of claims 1 to 8, **characterized in that** the projections (10) are formed by tabs on the expander (8) or on the metal strip.

10. The three-piece oil scraper piston ring (2) according to any one of claims 1 to 9, **characterized in that** centering projections (52) are provided by means of which the expander (8), the circular, corrugated, flat metal strip and/or the stabilizing ring (6) are centered in a piston ring groove (44) relative to a groove bottom (48).

11. The three-piece oil scraper piston ring (2) according to any one of the preceding claims, **characterized in that** a ring gap region of the stabilizing ring (6) is provided with connecting elements which allow the ring gap of the stabilizing ring (6) to be closed.

12. The three-piece oil scraper piston ring (2) according to any one of the preceding claims, **characterized in that** the stabilizing ring (6) is inwardly preloaded.

## Revendications

1. Segment racleur d'huile en trois parties pour un piston (2) comprenant un segment racleur supérieur en forme de disque (4), un segment stabilisateur inférieur en forme de disque (6) et un ressort d'expansion (8) circulaire qui comporte des saillies (10) axiales du côté intérieur, et dans lequel le ressort d'expansion (8) circulaire est disposé entre le segment racleur supérieur (4) et le segment stabilisateur inférieur (6), dans lequel les saillies (10) viennent respectivement en appui vers l'intérieur contre un côté intérieur (14) du segment racleur (4) ou un côté intérieur (16) du segment stabilisateur (6), **caractérisé en ce qu'**un rayon extérieur (18) du segment racleur (4) est plus grand qu'un rayon extérieur (20) du segment stabilisateur inférieur (6), **caractérisé en ce que** le segment racleur supérieur (4) et le segment stabilisateur inférieur en forme de disque (6) ont une épaisseur égale dans la direction radiale (22, 24).

2. Segment racleur d'huile en trois parties pour un piston (2) selon la revendication 1, **caractérisé en ce que**, lorsque le segment racleur d'huile de piston (2) est installé, seul le segment racleur supérieur (4) est en contact avec un bord racleur comportant une surface intérieure de cylindre (40), et le segment stabilisateur inférieur en forme de disque (6) n'est pas en contact avec la surface intérieure de cylindre (40) lorsque le segment racleur d'huile de piston (2) est installé.

3. Segment racleur d'huile en trois parties pour un piston (2) selon l'une des revendications 1 à 2, **caractérisé en ce qu'**une épaisseur axiale (26) du segment racleur supérieur (4) est exactement la même qu'une épaisseur axiale (28) du segment stabilisateur inférieur en forme de disque.

4. Segment racleur d'huile en trois parties pour un piston (2) selon l'une des revendications 1 à 2, **caractérisé en ce qu'**une épaisseur axiale (26) du segment racleur supérieur (4) est inférieure à une épaisseur axiale (28) du segment stabilisateur inférieur (6).

5. Segment racleur d'huile en trois parties pour un piston (2) selon l'une des revendications 1 à 4, **caractérisé en ce que** le ressort d'expansion (8) circulaire est réalisé sous la forme d'une bande métallique (30) plate, ondulée dans la direction axiale.

6. Segment racleur d'huile en trois parties pour un piston (2) selon l'une des revendications 1 à 4, **caractérisé en ce que** le ressort d'expansion (8) circulaire est réalisé sous la forme d'une bande métallique (32) plate, ondulée dans la direction radiale.

7. Segment racleur d'huile en trois parties pour un piston (2) selon l'une des revendications 1 à 4, **caractérisé en ce que** le ressort d'expansion (8) est réalisé sous la forme d'un ressort de flexion (34) fendu.

8. Segment racleur d'huile en trois parties pour un piston (2) selon l'une des revendications 1 à 7, **caractérisé en ce que** le ressort d'expansion (8) est en outre pourvu d'un fil de stabilisation (38) qui passe par des ouvertures (36) dans les flancs ondulés de la bande métallique ondulée.

9. Segment racleur d'huile en trois parties pour un piston (2) selon l'une des revendications 1 à 8, **caractérisé en ce que** les saillies (10) sont formées par des languettes au niveau du ressort d'expansion (8) ou la bande métallique.

10. Segment racleur d'huile en trois parties pour un piston (2) selon l'une des revendications 1 à 9, **caractérisé en ce que** des saillies de centrage (52) sont prévues, lesquelles saillies de centrage permettent de centrer le ressort d'expansion (8), la bande métallique circulaire, ondulée et plate, et/ou le segment stabilisateur (6) dans une rainure de segment de piston (44) par rapport à un fond de rainure (48).

11. Segment racleur d'huile en trois parties pour un piston (2) selon l'une des revendications précédentes, **caractérisé en ce qu'**une zone d'articulation du segment stabilisateur (6) est pourvue d'éléments de liaison permettant de fermer l'articulation du segment stabilisateur (6).

12. Segment racleur d'huile en trois parties pour un piston (2) selon l'une des revendications précédentes, **caractérisé en ce que** le segment stabilisateur (6) est précontraint vers l'intérieur.
